(19) Europäisches Patentamt
European Patent Office
Office européen des brevets

(11) EP 4 242 258 B1

(12) **EUROPEAN PATENT SPECIFICATION**

(45) Date of publication and mention of the grant of the patent:
**14.05.2025 Bulletin 2025/20**

(21) Application number: **21889002.8**

(22) Date of filing: **15.10.2021**

(51) International Patent Classification (IPC):
***C08K 5/3492*** (2006.01) ***C08K 5/5313*** (2006.01)
***C08K 13/04*** (2006.01) ***C08L 27/12*** (2006.01)
***C08L 67/02*** (2006.01) ***C08L 79/00*** (2006.01)
***C08K 5/00*** (2006.01)

(52) Cooperative Patent Classification (CPC):
(C-Sets available)
**C08L 67/02;** C08K 5/0066; C08K 2201/005 (Cont.)

(86) International application number:
**PCT/JP2021/038175**

(87) International publication number:
**WO 2022/097449 (12.05.2022 Gazette 2022/19)**

(54) **FLAME-RETARDANT POLYBUTYLENE TEREPHTHALATE RESIN COMPOSITION, AND RESIN MOLDED PRODUCT**

FLAMMHEMMENDE POLYBUTYLENTEREPHTHALATHARZZUSAMMENSETZUNG UND HARZFORMPRODUKT

COMPOSITION DE RÉSINE DE POLY(TÉRÉPHTALATE DE BUTYLÈNE) IGNIFUGE ET PRODUIT MOULÉ EN RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2020 JP 2020185946**

(43) Date of publication of application:
**13.09.2023 Bulletin 2023/37**

(73) Proprietor: **Polyplastics Co., Ltd.**
**Tokyo 108-8280 (JP)**

(72) Inventors:
- **SAITO, Itsuki**
  **Fuji-shi, Shizuoka 416-8533 (JP)**
- **USHIJIMA, Ryuji**
  **Fuji-shi, Shizuoka 416-8533 (JP)**
- **GOSHIMA, Kazuya**
  **Fuji-shi, Shizuoka 416-8533 (JP)**
- **FUKATSU, Hiroki**
  **Fuji-shi, Shizuoka 416-8533 (JP)**

(74) Representative: **Maiwald GmbH**
**Elisenhof**
**Elisenstraße 3**
**80335 München (DE)**

(56) References cited:
**WO-A1-2011/155289**
**WO-A1-2020/059651**
**DE-T5- 112006 001 824**
**JP-A- 2004 204 193**
**JP-A- 2009 512 766**
**JP-A- 2010 280 793**
**JP-A- 2015 531 808**
**JP-A- 2016 153 471**
**JP-A- 2018 035 344**
**JP-A- H07 233 311**
**US-A1- 2012 083 553**
**US-B2- 8 921 465**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 242 258 B1

(52) Cooperative Patent Classification (CPC): (Cont.)

C-Sets
**C08L 67/02, C08L 67/025, C08K 5/34924,**
**C08K 5/5313, C08K 7/14**

## Description

[TECHNICAL FIELD]

The present invention relates to a flame-retardant polybutylene terephthalate resin composition and a resin molded products.

[BACKGROUND ART]

Polybutylene terephthalate resin (hereinafter also referred to as "PBT resin") has excellent mechanical properties, electrical properties, heat resistance, weather resistance, water resistance, and chemical resistance, and the resin is widely used as an engineering plastic for various applications such as automotive parts and electrical and electronic parts. However, as the fields of application have increased, the required performance has become gradually higher, and enhancements in flame retardancy, tracking resistance, and hydrolytic resistance are desired when the resin is used for automotive parts, for example.

To enhance the tracking resistance of PBT resin, a PBT resin composition has been proposed which is obtained by combining and blending a phosphorus-based flame retardant with a nitrogen-containing compound (see Patent Literature 1) .

Further, since a phosphorus-based flame retardant generally decreases the hydrolytic resistance, a resin composition has been proposed which has enhanced hydrolytic resistance by adding an epoxy compound or carbodiimide (see Patent Literatures 2 and 3).

[Citation List]

[Patent Literature]

[Patent Literature 1] WO 2011/148796
[Patent Literature 2] Japanese Unexamined Patent Application Publication No. 2019-44037
[Patent Literature 3] Japanese Unexamined Patent Application Publication No. 2009-215347

US 2012/083553 describes a molded article for an electric vehicle part using a thermoplastic polyester resin composition. The molded article for an electric vehicle part is formed by molding the thermoplastic polyester resin composition including a thermoplastic polyester resin, which has a terminal carboxyl group amount that is no more than 30 meq/kg, and a flame retardant.
US 8,921,465 describes a polybutylene terephthalate resin composition prepared by compounding polyamide resin, an organic phosphorous flame retardant, and a nitrogen-containing flame retardant assistant into polybutylene terephthalate resin, wherein the content of the polyamide resin is not less than 1 part by mass and not more than 15 parts by mass to 100 parts by mass of the polybutylene terephthalate resin.
DE 11 2006 001 824 describes a resin composition composed of (A) a base resin (specifically, a polyester resin, a polyamide resin or the like), (B) a halogen flame retardant (specifically, a bromine-containing flame retardant such as a brominated polybenzyl(meth)acrylate resin or a brominated styrene resin), (C) an organic/inorganic acid salt, specifically an organic phosphinate (such as a metal salt or an aminotriazine compound salt) or an oxo acid salt (such as a polyphosphate or (pyro)sulfate) of a basic nitrogen-containing compound (such as an aminotriazine compound), and (D) an electrical characteristics improver, specifically an olefin resin (such as $\alpha$-$C_{2-3}$-Olefin-(meth)acrylate copolymer), a fluorine resin or a group IV metal compound (such as titanium oxide).

[SUMMARY OF THE INVENTION]

[PROBLEM TO BE SOLVED BY THE INVENTION]

However, the resin composition disclosed in Patent Literature 2 does not have sufficient hydrolytic resistance, the resin composition disclosed in Patent Literature 3 has insufficient flame retardancy (V-0) for UL 94 and the like, and when the resin compositions disclosed in the examples is used for an injection molded product, molding has been difficult due to the high viscosity of the compositions.

That is, further enhancements have been desired for conventional PBT resin compositions because the compositions have not satisfied all of the following: excellent flame retardancy, excellent tracking resistance, excellent

hydrolytic resistance, and low melt viscosity.

The present invention has been devised in view of the above conventional problems, and an object of the present invention is to provide a flame-retardant polybutylene terephthalate resin composition having excellent flame retardancy, tracking resistance, and hydrolytic resistance and also low melt viscosity, and a resin molded product obtained by molding the same.

[MEANS FOR SOLVING THE PROBLEM]

One aspect of the present invention to solve the problems is as follows.

(1) A flame-retardant polybutylene terephthalate resin composition including, relative to 100 parts by mass of (A) a polybutylene terephthalate resin: 0 to 100 parts by mass of (B) a fibrous inorganic compound; 25 to 50 parts by mass of (C) at least one selected from the group consisting of a phosphinate represented by General formula (1), a polymer thereof, a diphosphinate represented by General formula (2), and a polymer thereof; 4 to 15 parts by mass of (D) a salt of a triazine compound with a cyanuric acid or an isocyanuric acid; 5 to 15 parts by mass of (E) a thermoplastic polyester elastomer; 0.5 to 3 parts by mass of (F) a polycarbodiimide compound; and 0 to 3 parts by mass of (G) a fluorine resin.

[Formula 1]

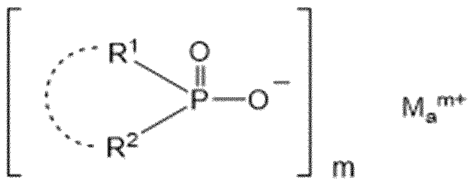

General formula (1)

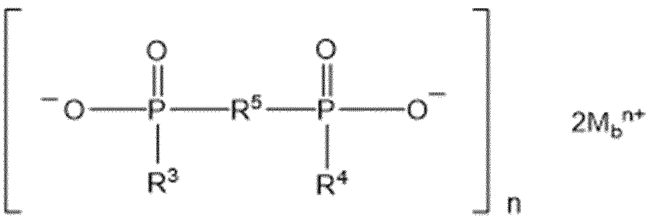

General formula (2)

[In General formula (1) and General formula (2), $R^1$, $R^2$, $R^3$, and $R^4$ independently indicate an alkyl group, a cycloalkyl group, an aryl group, or an aralkyl group, respectively, and $R^5$ indicates an alkylene group, an alicyclic divalent group, or an aromatic divalent group. $R^1$ and $R^2$ may bond together to form a ring together with adjacent phosphorus atoms. $M_a^{m+}$ indicates a metal of valence m, and m is an integer of 2 to 4. $M_b^{n+}$ indicates a metal of valence n, and n is an integer of 2 to 4.]

(2) The flame-retardant polybutylene terephthalate resin composition according to (1), in which a cumulative particle size (D95) of (c) the phosphinate represented by the General formula (1), the polymer thereof, the diphosphinate represented by the General formula (2), and the polymer thereof measured in accordance with JIS 8825 is 10 μm or more.

(3) The flame-retardant polybutylene terephthalate resin composition according to (1) or (2), in which (F) the polycarbodiimide compound is an aromatic polycarbodiimide.

(4) The flame-retardant polybutylene terephthalate resin composition according to any one of (1) to (3), in which when a content of the (C) component is defined as $C_{content}$ (parts by mass), a content of the (D) component is defined as $D_{content}$ (parts by mass), a content of the (B) component is defined as $B_{content}$ (parts by mass), a content of the (G) component is defined as $G_{content}$ (parts by mass), a content of the (E) component is defined as $E_{content}$ (parts by mass), and a density of the (E) component is defined as $E_{density}$ ($g/cm^3$), Formula 1 below is satisfied.

[Formula 1]

$$5C_{content} + 5D_{content} + 0.5B_{content} + G_{content} - \frac{10E_{content}}{E_{density}{}^{3}} \geq 140 \quad \cdots \text{Formula 1}$$

(5) A resin molded product obtained by molding the flame-retardant polybutylene terephthalate resin composition according to any one of (1) to (4).

[Effect of the Invention]

According to the present invention, it is possible to provide a flame-retardant polybutylene terephthalate resin composition having excellent flame retardancy, tracking resistance, and hydrolytic resistance and also low melt viscosity, and a resin molded product obtained by molding the same.

[MODES FOR CARRYING OUT THE INVENTION]

<Polybutylene terephthalate resin composition>

A flame-retardant polybutylene terephthalate resin composition (hereinafter simply referred to as a "PBT resin composition") of the present embodiment includes, relative to 100 parts by mass of (A) a polybutylene terephthalate resin: 0 to 100 parts by mass of (B) a fibrous inorganic compound; 25 to 50 parts by mass of (C) at least one selected from the group consisting of a phosphinate represented by General formula (1), a polymer thereof, a diphosphinate represented by General formula (2), and a polymer thereof; 4 to 15 parts by mass of (D) a salt of a triazine compound with a cyanuric acid or an isocyanuric acid; 5 to 15 parts by mass of (E) a thermoplastic polyester elastomer; 0.5 to 3 parts by mass of (F) a polycarbodiimide compound; and 0 to 3 parts by mass of (G) a fluorine resin.

The PBT resin composition according to the present embodiment has excellent flame retardancy, tracking resistance, and hydrolytic resistance and also low melt viscosity by containing, relative to 100 parts by mass of (A) a PBT resin: a prescribed amount of (B) a fibrous inorganic compound; (C) at least one selected from the group consisting of a phosphinate represented by General formula (1), a polymer thereof, a diphosphinate represented by General formula (2), and a polymer thereof (hereinafter also referred to as "(C) diphosphinate and the like"); (D) a salt of a triazine compound with a cyanuric acid or an isocyanuric acid; (E) a thermoplastic polyester elastomer; (F) a polycarbodiimide compound; and (G) a fluorine resin (however, components (B) and (G) are optional).

Each component will be described in detail below. In the present specification, "(A) the PBT resin" is sometimes referred to as component (A), and the same applies to each component (B) to (G).

[(A) Polybutylene terephthalate resin (PBT resin)]

PBT resin is resin obtained by means of polycondensation of a dicarboxylic acid component and a glycol component. The dicarboxylic acid component contains at least terephthalic acid or an ester-forming derivative thereof (C1-6 alkyl ester, acid halide, or the like). The glycol component contains at least alkylene glycol with 4 carbon atoms (1,4-butanediol) or an ester-forming derivative thereof (an acetylation product or the like). The PBT resin is not limited to homopolybutylene terephthalate, and may be a copolymer containing 60 mol% or more (particularly 75 mol% or more and 95 mol% or less) of butylene terephthalate units.

The amount of the terminal carboxyl groups of the PBT resin is not particularly limited as long as the effect of the PBT resin composition of the present embodiment is not inhibited. The amount of the terminal carboxyl groups of the PBT resin is preferably 30 meq/kg or less, and more preferably 25 meq/kg or less.

The intrinsic viscosity (IV) of the PBT resin is preferably 0.69 to 1.00 dL/g. If PBT resin having an intrinsic viscosity in this range is used, the resulting resin composition is particularly excellent in mechanical properties and fluidity. Conversely, if the intrinsic viscosity is less than 0.69 dL/g, excellent mechanical properties or hydrolytic resistance may not be obtained, and if the intrinsic viscosity is more than 1.00 dL/g, excellent fluidity may not be obtained.

PBT resin having an intrinsic viscosity in the above range can also be blended with PBT resin having a different intrinsic viscosity to adjust the intrinsic viscosity. PBT resin having an intrinsic viscosity of 0.8 dL/g can be prepared by blending PBT resin having an intrinsic viscosity of 0.9 dL/g with PBT resin having an intrinsic viscosity of 0.7 dL/g, for example. The intrinsic viscosity (IV) of the PBT resin can be measured in o-chlorophenol at a temperature of 35°C, for example.

In the PBT resin, examples of dicarboxylic acid components (comonomer components) other than terephthalic acid and its ester-forming derivatives include C8-14 aromatic dicarboxylic acids such as isophthalic acid, phthalic acid, 2,6-naphthalenedicarboxylic acid, and 4,4'-dicarboxydiphenyl ether; C4-16 alkanedicarboxylic acids such as succinic acid, adipic acid, azelaic acid, and sebacic acid; C5-10 cycloalkanedicarboxylic acids such as cyclohexane dicarboxylic

acid; and ester-forming derivatives of these dicarboxylic acid components (C1-6 alkyl ester derivatives, acid halides, and the like). These dicarboxylic acid components can be used alone or a combination of two or more can be used.

Among these dicarboxylic acid components, the following are more preferable: C8-12 aromatic dicarboxylic acids such as isophthalic acid, and C6-12 alkanedicarboxylic acids such as adipic acid, azelaic acid, and sebacic acid.

In the PBT resin, examples of glycol components (comonomer components) other than 1,4-butanediol include C2-10 alkylene glycols such as ethylene glycol, propylene glycol, trimethylene glycol, 1,3-butylene glycol, hexamethylene glycol, neopentyl glycol, and 1,3-octanediol; polyoxyalkylene glycols such as diethylene glycol, triethylene glycol, and dipropylene glycol; alicyclic diols such as cyclohexanedimethanol and hydrogenated bisphenol A; aromatic diols such as bisphenol A and 4,4'-dihydroxybiphenyl; C2-4 alkylene oxide adducts of bisphenol A such as an ethylene oxide 2-mol adduct of bisphenol A and a propylene oxide 3-mol adduct of bisphenol A; and ester-forming derivatives (acetylation products or the like) of these glycols. These glycol components can be used alone or a combination of two or more can be used.

Among these glycol components, the following are more preferable: C2-6 alkylene glycols such as ethylene glycol and trimethylene glycol; polyoxyalkylene glycols such as diethylene glycol; and alicyclic diols such as cyclohexanedimethanol.

In addition to the dicarboxylic acid components and the glycol components, examples of other usable comonomer components include aromatic hydroxycarboxylic acids such as 4-hydroxybenzoic acid, 3-hydroxybenzoic acid, 6-hydroxy-2-naphthoic acid, and 4-carboxy-4'-hydroxybiphenyl; aliphatic hydroxycarboxylic acids such as glycolic acid and hydroxycaproic acid; C3-12 lactones such as propiolactone, butyrolactone, valerolactone, and caprolactone (epsiloncaprolactone or the like); and ester-forming derivatives of these comonomer components (C1-6 alkyl ester derivatives, acid halides, acetylation products, and the like).

[(B) Fibrous inorganic compound]

In the present embodiment, (B) a fibrous inorganic compound is an optional component used for the purpose of enhancing mechanical strength. Examples of a fibrous inorganic compound include mineral-derived fibers such as glass fibers, carbon fibers, zinc oxide fibers, titanium oxide fibers, wollastonite, silica fibers, silica-alumina fibers, zirconia fibers, boron nitride fibers, silicon nitride fibers, boron fibers, and potassium titanate fibers; and metal fibers such as stainless steel fibers, aluminum fibers, titanium fibers, copper fibers, and brass fibers. Among them, glass fibers are preferable. One of these may be used alone or two or more may be used in combination.

When glass fibers are used, the type thereof is not particularly limited. It is possible to use A glass, C glass, D glass, E glass, and the like, but among them, E glass (alkaline-free glass) is preferably used, for example.

In addition, the glass fibers are preferably used as chopped strands (chopped glass fibers), in which a number of the glass fibers are converged and cut to a predetermined length. The cut length of the chopped glass fibers is not particularly limited and may be about 1 to 10 mm, for example.

A fibrous inorganic compound is required for a product requiring heat resistance and rigidity and a smaller amount of fibrous inorganic compound is preferable for a product requiring good appearance. In the present embodiment, the amount of the fibrous inorganic compound relative to 100 parts by mass of the PBT resin is 0 to 100 parts by mass, and if the amount of the fibrous inorganic compound is more than 100 parts by mass, the melt viscosity increases, the toughness decreases, and the appearance deteriorates. The amount contained of the fibrous inorganic compound is preferably 0 to 80 parts by mass, and more preferably 0 to 70 parts by mass.

[(C) Phosphinate, diphosphinate, and polymers thereof]

In the present embodiment, at least one selected from the group consisting of phosphinate represented by General formula (1) below, a polymer thereof, diphosphinate represented by General formula (2) below, and a polymer thereof is used for the purpose of enhancing flame retardancy and tracking resistance.

[Formula 2]

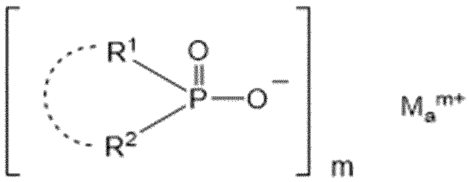

General formula (1)

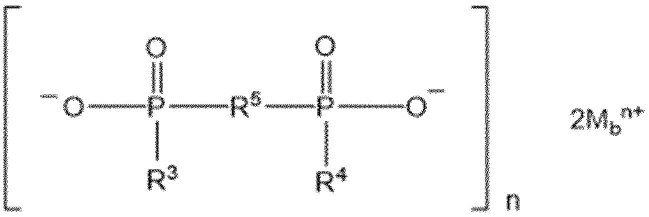

General formula (2)

[In General formulas (1) and (2), $R^1$, $R^2$, $R^3$, and $R^4$ independently indicate an alkyl, cycloalkyl, aryl, or aralkyl groups, respectively, and $R^5$ indicates an alkylene, alicyclic divalent, or aromatic divalent group. $R^1$ and $R^2$ may bond together to form a ring together with adjacent phosphorus atoms. $M_a^{m+}$ indicates a metal of valence m, and m is an integer of 2 to 4. $M_b^{n+}$ indicates a metal of valence n, and n is an integer of 2 to 4.]

Examples of alkyl groups represented by $R^1$ to $R^4$ include linear or branched chain C1-6 alkyl groups such as methyl, ethyl, isopropyl, n-butyl, and t-butyl groups. Examples of cycloalkyl groups include C5-8 cycloalkyl groups such as cyclohexyl groups. Examples of aryl groups include C6-10 aryl groups such as phenyl groups. Examples of aralkyl groups include C6-10 aryl-C1-4 alkyl groups such as benzyl groups. Among these groups, alkyl groups (preferably C1-4 alkyl groups and the like) and aryl groups (phenyl groups and the like) are usually preferred.

The ring formed by $R^1$ and $R^2$ bonding together with the adjacent phosphorus atoms is a heterocycle (a phosphorus atom-containing heterocycle) containing a phosphorus atom as a heteroatom forming the ring, and examples usually include 4 to 20 membered heterocycles and preferably 5 to 16 membered heterocycles. In addition, the phosphorus atom-containing heterocycle may be a bicyclo ring. The phosphorus atom-containing heterocycle may have a substituent.

Examples of an alkylene group represented by $R^5$ include a linear or branched chain C1-10 alkylene group which may have a substituent such as a C6-10 aryl group such as a methylene, ethylene, phenylethylene, propylene, trimethylene, 1,4-butanediyl, or 1,3-butanediyl group. Examples of alicyclic bivalent groups include C5-8 alicyclic bivalent groups such as cyclohexylene groups or cyclohexadimethylene groups. Examples of aromatic divalent groups include C6-10 arylene groups which may have substituents such as C1-4 alkyl groups such as phenylene groups or tolylene groups; C6-10 arylene di C1-4 alkylene groups which may have C1-4 alkyl groups such as methyl groups in arene rings such as xylylene groups; and bisaryl groups which may have C1-4 alkyl groups such as methyl groups in arene rings (for example, biphenylene groups; linear or branched chain C1-4 alkane-di C6-10 arylene groups such as diphenylmethanediyl; divalent groups corresponding to C6-10 aryl ethers such as diphenyl ethers; divalent groups corresponding to di C6-10 aryl ketones such as diphenyl ketones; divalent groups corresponding to di C6-10 aryl sulfides, such as diphenyl sulfides, and the like). Among these, an alkylene group (particularly a C1-6 alkylene group) is preferred as $R^5$.

Examples of metals represented by $M_a$ and $M_b$ include alkali metals (potassium, sodium, and the like), alkaline-earth metals (magnesium, calcium, and the like), transition metals (iron, cobalt, nickel, copper, and the like), Group 12 metals of the periodic table (zinc and the like), and Group 13 metals of the periodic table (aluminum and the like). The metal salts may contain one or a combination of two or more of these metals. Among the above metals, the alkaline-earth metals (magnesium, calcium, and the like) and the Group 13 metals of the periodic table (aluminum and the like) are preferred.

The valence of the metal is particularly 1 to 4, but preferably 2 to 4, more preferably 2 or 3.

Specific examples of phosphinic acid represented by General formula (1) include dialkylphosphinate Ca salts such as dimethylphosphinate Ca, methylethylphosphinate Ca, and diethylphosphinate Ca (di C1-10 alkylphosphinate Ca salts and the like), arylphosphinate Ca salts such as phenylphosphinate Ca and diphenylphosphinate Ca (mono- or di-C6-10 arylphosphinate Ca salts and the like), alkylarylphosphinate Ca salts such as methylphenylphosphinate Ca (C1-4 alkyl-C6-10 arylphosphinate Ca salts and the like), Ca salts of alkylene phosphinate that may have substituents such as 1-hydroxy-1H-phosphorane-1-oxide Ca salt and 2-carboxy-1-hydroxy-1H-phosphorane-1-oxide Ca salt (C3-8 alkylene phosphinate Ca salts and the like), Al salts corresponding to these Ca salts, and additionally other metal salts.

Specific examples of diphosphinates represented by General formula (2) include alkanebis (phosphinic acid) Ca

salts (C1-10 alkanebis (phosphinic acid) Ca salts) such as ethane-1,2-bis (phosphinic acid) Ca salts, alkanebis (alkylphosphinic acid) Ca salts (C1-6 alkylphosphinic acid) Ca salts and the like) such as ethane-1,2-bis (methylphosphinic acid) Ca salts (C1-10 alkanebis, Al salts corresponding to these Ca salts, and additionally other metal salts.

Preferable phosphinic acids are particularly dialkylphosphinate metal salts (Ca salts, Al salts, and the like) and alkanebisphosphinate metal salts (Ca salts, Al salts, and the like) from among the metal salts represented by above General formulas (1) or (2).

In the present embodiment, the cumulative particle size (D95) (hereinafter also referred to as "D95 particle size") of (C) the diphosphinate or the like measured in accordance with JIS 8825 is preferably 5 μm or more and 500 μm or less, and more preferably 10 μm or more and 200 μm or less. If the D95 particle size is less than 5 μm, a deterioration in the hydrolytic resistance is caused. Alternatively, if the D95 particle size is more than 500 μm, clogging is likely to occur at the gate of a mold, and the appearance of the molded product deteriorates.

In the present embodiment, the amount contained of (C) the phosphinate or the like relative to 100 parts by mass of the PBT resin is 25 to 50 parts by mass. If the amount is less than 25 parts by mass, the flame retardancy becomes insufficient, and if the amount is more than 50 parts by mass, a decrease in mechanical properties and hydrolytic resistance is caused. At least one selected from the group consisting of a phosphinate represented by General formula (1), a polymer thereof, a diphosphinate represented by General formula (2), and a polymer thereof preferably contains 28 to 48 parts by mass of the phosphinate, and more preferably 30 to 45 parts by mass of the phosphinate.

[(D) Salt of triazine compound with cyanuric acid or isocyanuric acid]

A salt of a triazine compound with cyanuric acid or isocyanuric acid serves as a flame retardant aid. A preferable example of the salt is a salt of a triazine compound represented by General formula (3) with cyanuric acid or isocyanuric acid.

[Formula 3]

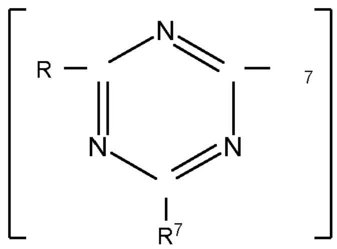

General

[In General formula (3), $R^6$ and $R^7$ are each independently a hydrogen atom, an amino group, an aryl group, or an oxyalkyl group with 1 to 3 carbons, and $R^6$ and $R^7$ may be the same or different.]

In the present embodiment, the use of melamine cyanurate is particularly preferred from among the salts of the triazine compound represented by General formula (3) with cyanuric acid or isocyanuric acid.

The D95 particle size of the salt of the triazine compound with cyanuric acid or isocyanuric acid is preferably 100 μm or less, more preferably 0.1 to 80 μm, and even more preferably 1 to 60 μm. If the D95 particle size is 100 μm or more, a deterioration in the fluidity is caused.

In the present embodiment, the amount contained of the salt of the triazine compound with cyanuric acid or isocyanuric acid is 4 to 15 parts by mass. If the amount is less than 4 parts by mass, the flame retardancy becomes insufficient, and alternatively if the amount is more than 15 parts by mass, a deterioration in mechanical properties such as strength and toughness is caused. The amount contained of the salt of the triazine compound with cyanuric acid or isocyanuric acid is preferably 4 to 14 parts by mass, and more preferably 5 to 13 parts by mass.

[(E) Thermoplastic polyester elastomer]

A thermoplastic polyester elastomer is used for the purpose of enhancing the toughness of a resin composition. In addition, the thermoplastic polyester elastomer is excellent in flame retardancy compared to a general olefin-based elastomer in which polyethylene and polypropylene are used for hard segments, and copolymers such as polypropylene rubber and ethylene-vinyl acetate copolymers are used for soft segments. The thermoplastic polyester elastomer is generally a block copolymer having a structure in which a hard polyester block (a hard block or hard segment such as aromatic polyester) and a soft polyester block (a soft block or soft segment) are bound by means of ester bonds. The thermoplastic polyester elastomer can be classified into the two types of a polyether type and a polyester type depending

on the type of the soft block, and either type can be used in the present embodiment.

As with the PBT resin, a hard polyester forming a hard block can be obtained by means of the polycondensation of dicarboxylic acids and diols, polycondensation of oxycarboxylic acids, and the like. Generally, it is possible to use at least an aromatic polyester using aromatic monomer components [aromatic diols and reactive derivatives thereof as exemplified in the above PBT resin section, aromatic dicarboxylic acids and terephthalic acids as exemplified in the above PBT resin section (also including reactive derivatives of these aromatic dicarboxylic acids), and/or aromatic oxycarboxylic acids (oxybenzoic acid, oxynaphthoic acid, 4-carboxy-4'hydroxy-biphenyl, and additionally derivatives of these oxycarboxylic acids (alkyl, alkoxy, or halogen substituents, and the like))]. The aromatic monomer component can be used alone or a combination of two or more can be used. For the aromatic polyester, the following may be used in combination when necessary: a copolymerizable monomer (also including 1,4-butanediol, terephthalic acid, and the like in addition to the copolymerizable monomer exemplified in the above PBT resin section).

For the aromatic polyester, at least an aromatic monomer component may be used as a monomer component. The aromatic polyester may be a fully aromatic polyester (polyesters of aromatic dicarboxylic acids and aromatic diols, polyesters of aromatic oxycarboxylic acids, and the like); a polyester of an aromatic dicarboxylic acid and a non-aromatic diol (1,4-butanediol, aliphatic and alicyclic diols, and the like as exemplified in the PBT resin section); a polyester of a non-aromatic dicarboxylic acid (such as aliphatic dicarboxylic acids exemplified in the above PBT resin section) and an aromatic diol; or a polyester of an aromatic oxycarboxylic acid and a non-aromatic oxycarboxylic acid (aliphatic oxycarboxylic acids such as glycolic acids or oxycaproic acids).

Among the hard polyesters, the following are preferable: crystalline aromatic polyesters [for example, polyalkylene arylate (poly C2-4 alkylene arylate such as polyethylene terephthalate, polybutylene terephthalate, polyethylene naphthalate, or polybutylene naphthalate; modified poly C2-4 alkylene arylate modified or copolymerized with 1 to 30 mol% (for example, a proportion of about 3 to 25 mol%, preferably about 5 to 20 mol%) of a copolymerization component (an exemplified copolymerizable monomer such as isophthalic acid))]; liquid crystalline polyesters, and particularly polybutylene terephthalate.

The soft polyester forming the soft block of the polyester-type elastomer can be obtained by means of the polycondensation of dicarboxylic acids and diols, the polycondensation of oxycarboxylic acids and lactones, and the like as in the case of the PBT resin. It is sufficient if the soft polyester is softer than the hard polyester forming the hard block. As the soft polyester, generally it is possible to use at least polyesters using aliphatic monomer components [aliphatic diols (1,4-butanediol, aliphatic diol and reactive derivatives thereof as exemplified in the above PBT resin section), aliphatic dicarboxylic acids (such as aliphatic dicarboxylic acids and reactive derivatives thereof as exemplified in the above PBT resin section), aliphatic oxycarboxylic acids (glycolic acid, oxycaproic acid, and the like), lactones as exemplified in the above PBT resin section]. If necessary, for the aliphatic monomer component, copolymerizable monomers (generally, non-aromatic monomer components, for example, alicyclic diols and alicyclic dicarboxylic acids and reactive derivatives thereof as exemplified in the above PBT resin section) may be used in combination.

Among the soft polyesters, the following are preferable: amorphous polyesters, for example, aliphatic polyesters using aliphatic dicarboxylic acids and aliphatic diols, and polylactones (ring-opening polymers of the above-described lactones).

It is sufficient if the soft segment of the polyether-type elastomer has at least a polyether unit. The segment can be formed of polyethers [for example, aliphatic polyethers with polyoxyalkylene units (polyoxyalkylene glycol as exemplified in the above PBT resin section, preferably poly C2-6 alkylene glycol, and the like)] or polyesters using the polyethers. Among the polyethers, it is preferable to use poly C2-4 alkylene glycols such as polyoxyethylene glycol, polyoxypropylene glycol, and polyoxytetramethylene glycol. Examples of polyesters using the polyethers include polyesters of polyether (polyoxyalkylene glycol and the like) and dicarboxylic acid [generally, non-aromatic dicarboxylic acids, for example aliphatic or alicyclic dicarboxylic acids and reactive derivatives thereof as exemplified in the above PBT resin section].

Among these soft blocks, it is preferable to use a soft polyester block having at least one unit selected from a polyether unit (an aliphatic polyether unit, a polyester unit using aliphatic polyether) and an aliphatic polyester unit.

Specific examples of thermoplastic polyester elastomers include polyester-type (that is, polyester-polyester-type) thermoplastic elastomers [block copolymers of hard segments composed of aromatic crystalline polyesters such as poly C2-4 alkylene arylate (particularly, homopolymers with polybutylene terephthalate units or copolymers in which copolymerization components (ethylene glycol, isophthalic acid, and the like) are copolymerized) and liquid crystalline polyesters, and soft segments composed of aliphatic polyesters (polyesters of C2-6 alkylene glycols such as polyethylene adipate and polybutylene adipate, and C6-12 alkanedicarboxylic acid)] and polyether-type (that is, polyester-polyether type) thermoplastic elastomers [for example, block copolymers of hard segments composed of aromatic crystalline or liquid crystalline polyesters, and soft segments composed of polyethers such as polyoxy C2-4 alkylene glycols such as polytetramethylene ether glycols (polyesters of polyoxyalkylene glycols and dicarboxylic acids)].

Among the polyester elastomers, it is preferable to use block copolymers of (e-1) polyalkylene arylate hard blocks and (e-2) soft polyester blocks composed of polycaprolactone, aliphatic polyethers having oxy C2-6 alkylene units (poly C2-6 alkylene glycol and the like) and aliphatic polyesters. The thermoplastic polyester elastomer can be used alone or a

combination of two or more can be used.

In the thermoplastic elastomer, the mass ratio of the hard segment (or the hard component) to the soft segment (or the soft component) is, if expressed as the former/latter, about 10/90 to 90/10, preferably about 20/80 to 80/20, and even more preferably about 30/70 to 70/30 (for example, about 40/60 to 60/40).

In applications where flexibility is required, the flexural modulus of the thermoplastic polyester elastomer is 1000 MPa or less, and is preferably in the range of 50 to 400 MPa (particularly 100 to 300 MPa). In such applications, if the flexural modulus is too small, problems may occur in handling during processing, and alternatively if the flexural modulus is too large, sufficient flexibility may not be obtained.

The PBT resin composition of the present embodiment contains 5 to 15 parts by mass of the thermoplastic polyester elastomer. If the amount of the thermoplastic polyester elastomer is less than 5 parts by mass, the effect of enhancing toughness is low, and if the amount of the thermoplastic polyester elastomer is more than 15 parts by mass, deformation is likely to occur due to a decrease in rigidity. The PBT resin composition preferably contains 6 to 13 parts by mass of the thermoplastic polyester elastomer, and more preferably 8 to 12 parts by mass of the thermoplastic polyester elastomer.

[(F) Polycarbodiimide compound]

In the present embodiment, a polycarbodiimide compound is used for the purpose of enhancing the hydrolytic resistance. The polycarbodiimide compound is a compound having at least two carbodiimide groups represented by (-N=C=N-) in a molecule, and a compound synthesized based on a generally well-known method can be used. The compound can be synthesized by subjecting various polyisocyanates (diisocyanates) to a decarboxylative condensation reaction in the absence of solvent or in an inert solvent at a temperature of about 70°C or higher using an organophosphorus compound or an organometallic compound as a catalyst, for example. The methods for producing the polycarbodiimide compound disclosed in U.S. Patent No. 2941956, Japanese Examined Patent Application Publication No. Sho 47-33279, and J. Org. Chem. 28, 2069-2075 (1963), Chemical Review 1981. Vol.81. No.4. p. 619-621 are publicly known.

Examples of organic diisocyanates that are synthetic raw materials in the production of the polycarbodiimide compound include aliphatic diisocyanates, alicyclic diisocyanates, aromatic diisocyanates, and mixtures thereof. Specifically, examples include hexamethylene diisocyanate, cyclohexane-1,4-diisocyanate, isophorone diisocyanate, dicyclohexylmethane-4,4'-diisocyanate, methylcyclohexane diisocyanate, and the like.

In the case of the polycarbodiimide compound, the polymerization reaction can be stopped midway by cooling or the like to control the degree of polymerization to an appropriate degree. In this case, the end becomes an isocyanate. In addition, to control the degree of polymerization to an appropriate degree, there is a method in which a compound that reacts with the end isocyanate of an aliphatic polycarbodiimide compound such as a monoisocyanate is used to seal all or a part of the remaining end isocyanate. By controlling the degree of polymerization, the compatibility with the polymer can be enhanced and storage stability can be enhanced, and this is favorable in terms of quality improvement.

Examples of monoisocyanates that seal the end of such a polycarbodiimide compound and control the degree of polymerization include phenyl isocyanate, tolyl isocyanate, dimethyl phenyl isocyanate, cyclohexyl isocyanate, and butyl isocyanate.

The number-average molecular weight of a preferred polycarbodiimide compound used in the present embodiment is 1,000 to 30,000, preferably 2,000 to 20,000, and even more preferably 3,000 to 15,000. If the number-average molecular weight is too small, heat resistance may be poor, and alternatively if the number-average molecular weight is too large, the effect of enhancing the hydrolytic resistance may not be sufficiently obtained due to poor dispersion in the resin and decreased reactivity.

Since high hydrolytic resistance and heat resistance are required, it is particularly preferable to use aromatic polycarbodiimide containing aromatic components in a molecular chain skeleton. Examples include aromatic dicarbodiimide compounds such as p-phenylene-bis-o-tolylcarbodiimide, p-phenylene-bis-p-chlorphenylcarbodiimide, and ethylene-bis-diphenylcarbodiimide; and aromatic polycarbodiimide compounds such as poly(4,4'methylenebiscyclohexylcarbodiimide), poly(4,4'-diphenylmethane carbodiimide), poly(3,3'-dimethyl-4,4'-diphenylmethane carbodiimide), poly(naphthylene carbodiimide), poly(p-phenylene carbodiimide), poly(m-phenylene carbodiimide), poly(tolylcarbodiimide), poly(diisopropylphenylene carbodiimide), poly(methyl-diisopropylphenylene carbodiimide), poly(triethylphenylene carbodiimide), and poly(triisopropylphenylene carbodiimide).

Generally, if a thermoplastic aromatic polyester resin composition contains a carbodiimide compound, gas or odors may be caused during melt-kneading or molding. However, if the blending amount is 0.5 to 3.0 mass%, it is possible to achieve more excellent hydrolytic resistance and also it is possible to suppress the generation of isocyanate gas derived from the carbodiimide compound, and it is possible to achieve more excellent hydrolytic resistance while suppressing deterioration in the work environment. It is preferable that the composition contains 0.5 to 2.5 parts by mass of the polycarbodiimide compound, and more preferably 0.8 to 2.0 parts by mass of the polycarbodiimide compound.

[(G) Fluororesin]

In the present embodiment, the fluororesin is an optional component used as a drop inhibitor. Examples of the suitable fluororesin include homopolymers of fluorine-containing monomers such as tetrafluoroethylene, chlorotrifluoroethylene, vinylidene fluoride, hexafluoropropylene, and perfluoroalkyl vinyl ether or copolymers; and copolymers of the fluorine-containing monomer and copolymerizable monomers such as ethylene, propylene, and (meth)acrylate. One of these fluororesins can be used alone or two or more of them can be used in combination.

Examples of such fluororesin include homopolymers such as polytetrafluoroethylene, polychlorotrifluoroethylene, and polyvinylidene fluoride, and copolymers such as tetrafluoroethylene-hexafluoropropylene copolymers, tetrafluoroethylene-perfluoroalkyl vinyl ether copolymers, ethylene-tetrafluoroethylene copolymers, and ethylenechlorotrifluoroethylene copolymers.

The addition amount of the fluororesin relative to 100 parts by mass of (A) the polybutylene terephthalate resin is 0 to 3 parts by mass, preferably 0 to 2 parts by mass, and more preferably 0.3 to 1.0 parts by mass.

In the present embodiment, when the content of component (C) is defined as $C_{content}$ (parts by mass), the content of component (D) is defined as $D_{content}$ (parts by mass), and the content of component (B) is defined as $B_{oontent}$, and when the content of component (G) is defined as G content (parts by mass), the content of component (E) is defined as E content (parts by mass), and the density of component (E) is defined as E density (g/cm$^3$), it is preferable to satisfy formula 1 below. All of $C_{content}$ (parts by mass), $D_{content}$ (parts by mass), $B_{content}$ (parts by mass), G content (parts by mass), and E content (parts by mass) are content (parts by mass) relative to 100 parts by mass of component (A). The PBT resin composition of the present embodiment exhibits excellent flame retardancy by satisfying Formula 1. Formula 1 is a formula obtained by subtracting the content of component (E), which contributes to the reduction of flame retardancy, from the sum of the content of component (C), component (D), component (B), and component (G), which contribute to the enhancement of flame retardancy, and the content rate is set considering the contribution degree of each component. Since the degree of contribution to the reduction in flame retardancy of component (E) decreases in inverse proportion to the cube of the density of the component, the content of component (E) is divided by the cube of the density. The numerical range of Formula 1 is preferably 140 or more, and more preferably 140 to 300. If the numerical range is less than 140, the flame retardancy is not satisfied, and if the numerical range is more than 300, the appearance of the molded product deteriorates and physical properties decline.

[Formula 2]

$$5C_{content} + 5D_{content} + 0.5B_{content} + G_{content} - \frac{10E_{content}}{{E_{\mathrm{density}}}^{3}} \geq 140 \quad \cdots \text{Formula 1}$$

<Resin molded product>

A resin molded product of the present embodiment is formed by molding the above described PBT resin composition. Therefore, the resin molded product of the present embodiment has excellent flame retardancy, tracking resistance, and hydrolytic resistance similar to the PBT resin composition of the present embodiment. In addition, the PBT resin composition of the present embodiment is easily molded because it has low melt viscosity.

There is no particular limitation for the method of fabricating a resin molded product using the PBT resin composition of the present embodiment, and a known method can be adopted. The PBT resin composition of the present embodiment can be put into an extruder and then melt-kneaded and pelletized, for example. The thus obtained pellets can be put into an injection-molding machine having a predetermined mold and a molded product can be fabricated by performing injection-molding.

The resin molded product of the present embodiment can be suitably used as a resin composition for a molded product that is exposed to a high temperature and high humidity environment for a long period of time and is used for automotive, electric train, and aviation industry applications. Even if the molded product formed of the resin composition is used in a sufficiently high temperature and high humidity environment for a long period of time, it is possible to prevent the occurrence of degradation due to hydrolysis, and the molded product can be used for housings and connectors of parts where high voltage is used because the molded product has excellent tracking characteristics and flame retardancy.

Examples

The present embodiment will be described more specifically below by using examples; however, the present embodiment is not limited to the following examples.

[Example 1]

In each example and comparative example, pellets formed of the PBT resin composition were obtained as follows: a twin-screw extruder was used and components (A) to (F) were melt-kneaded and extruded at the ratios (parts by mass) shown in Tables 1 to 4, at a discharge rate of 15 kg/h and a screw rotation speed of 130 rpm, under conditions that a cylinder temperature of a raw material supply part and a die tip was 260°C and the temperature therebetween was 200 to 260°C. A 32-mmφ twin-screw extruder (manufactured by Japan Steel Works, LTD., TEX30α) was used as the twin-screw extruder. Details of each component shown in Tables 1 to 4 are shown below.

The particle size (D95 particle size) of component (C) and component (D) was measured using a laser diffraction/scattering-type particle size distribution measuring apparatus (manufactured by HORIBA, Ltd., "LA920") and using water as a dispersion medium.

(A) PBT resin

A1: manufactured by Polyplastics Co., Ltd., polybutylene terephthalate (intrinsic viscosity: 0.80 (dL/g))
A2: manufactured by Polyplastics Co., Ltd., polybutylene terephthalate (intrinsic viscosity: 0.79 (dL/g))
A3: manufactured by Polyplastics Co., Ltd., polybutylene terephthalate (intrinsic viscosity: 0.73 (dL/g))
A4: manufactured by Polyplastics Co., Ltd., polybutylene terephthalate (intrinsic viscosity: 0.69 (dL/g))

(B) Fibrous inorganic compound

B1: manufactured by Nippon Electric Glass Co., Ltd., glass fiber, ECS 03-T-187

(C) Phosphinate and the like

C1: manufactured by Clariant (Japan) K.K., phosphorus-based flame retardant aluminum tri(diethylphosphinate), EXOLIT 1240, particle size: 75 μm
C2: manufactured by Clariant (Japan) K.K., phosphorus-based flame retardant aluminum tri(diethylphosphinate), EXOLIT OP940, particle size: 20 μm
C3: manufactured by Clariant (Japan) K.K., phosphorus-based flame retardant aluminum tri(diethylphosphinate), EXOLIT OP935, particle size: 10 μm
C4: manufactured by Clariant (Japan) K.K., phosphorus-based flame retardant aluminum tri(diethylphosphinate), EXOLIT OP945, particle size 5 μm

(D) Salt of triazine and cyanuric acid

D1: manufactured by BASF Japan Ltd., melamine cyanurate MELAPUR MC50, particle size: 50 μm
D2: manufactured by BASF Japan Ltd., melamine cyanurate, particle size: 3 μm
D3: manufactured by BASF Japan Ltd., melamine cyanurate, particle size: 60 μm

(E) Thermoplastic polyester elastomer, comparison polymer

E1: manufactured by TOYOBO CO., LTD., polyester elastomer PELPRENE GP400, density: 1.14 g/cm$^3$
E2: manufactured by Mitsui Chemicals, Inc., α olefin copolymer TAFMER MP0610, density: 0.87 g/cm$^3$
E3: manufactured by Nippon Unicar Co., Ltd., ethylene ethyl acrylate copolymer NUC-6570, density: 0.93 g/cm$^3$
E4: manufactured by Dow Chemical Co., acrylic core shell polymer PARALOID EXL-2311, density: 1.10 g/cm$^3$
E5: manufactured by Sumitomo Chemical Co., Ltd., ethylene glycidyl methacrylate copolymer BONDFAST E, density: 0.94 g/cm$^3$

(F) Polycarbodiimide compound

F1: manufactured by LANXESS AG., carbodiimide STABAXOL P200

(G) Fluorine resin

G1: manufactured by DAIKIN INDUSTRIES, Ltd., POLYFLON MPA FA-500H

(Other ingredients)

- Antioxidant: manufactured by BASF Japan Ltd., IRGANOX 245
- Secondary antioxidant: manufactured by ADEKA CORPORATION, ADKSTAB PEP-36
- Lubricant: manufactured by RIKEN VITAMIN CO., LTD., B-74

[Table 1]

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| (A) PBT resin | A1 | IV:0.80dL/g | 100 | 100 | 100 | 100 | - | 100 | 100 | 100 | - | - | - |
| | A2 | IV:0.79dL/g | - | - | - | - | - | - | - | - | 100 | - | - |
| | A3 | IV:0.73dL/g | - | - | - | - | 100 | - | - | - | - | 100 | - |
| | A4 | IV:0.69dL/g | - | - | - | - | - | - | - | - | - | - | 100 |
| (B) Fibrous inorganic compound | B1 | - | 64.9 | 68.6 | 72.8 | 72.8 | 68.6 | 64.9 | 64.9 | 68.6 | 68.6 | 68.6 | 68.6 |
| (C) Phosphinate and the like | C1 | Particle size :75μm | 32.5 | 34.3 | 42.5 | 48.5 | 34.3 | - | - | - | - | - | - |
| | C2 | Particle size :20μm | - | - | - | - | - | 32.5 | 32.5 | 34.3 | 34.3 | 34.3 | 34.3 |
| | C3 | Particle size :10μm | - | - | - | - | - | - | - | - | - | - | - |
| | C4 | Particle size :5μm | - | - | - | - | - | - | - | - | - | - | - |
| (D) Salt of triazine and cyanuric acid | D1 | Particle size :50μm | 5.4 | 11.4 | 12.1 | 6.1 | 11.4 | 5.4 | - | - | 11.4 | 11.4 | 11.4 |
| | D2 | Particle size :3μm | - | - | - | - | - | - | 5.4 | 11.4 | - | - | - |
| | D3 | Particle size :60μm | - | - | - | - | - | - | - | - | - | - | - |
| (E) Thermoplastic polyester elastomer | E1 | - | 10.8 | 11.4 | 12.1 | 12.1 | 11.4 | 10.8 | 10.8 | 11.4 | 11.4 | 11.4 | 11.4 |
| | E2 | - | - | - | - | - | - | - | - | - | - | - | - |
| | E3 | - | - | - | - | - | - | - | - | - | - | - | - |
| | E4 | - | - | - | - | - | - | - | - | - | - | - | - |
| | E5 | - | - | - | - | - | - | - | - | - | - | - | - |
| (F) Polycarbodiimide | F1 | - | 1.1 | 1.1 | 1.2 | 1.2 | 1.1 | 1.1 | 1.1 | 1.1 | 1.1 | 1.1 | 1.1 |
| (G) Fluorine resin | G1 | - | 0.6 | 0.7 | 0.7 | 0.7 | 0.7 | 0.6 | 0.6 | 0.7 | 0.7 | 0.7 | 0.7 |

(continued)

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Antioxidant | 0.2 | 0.2 | 0.2 | 0.2 | 0.2 | 0.2 | 0.2 | 0.2 | 0.2 | 0.2 | 0.2 |
| Secondary antioxidant | 0.4 | 0.5 | 0.5 | 0.5 | 0.5 | 0.4 | 0.4 | 0.5 | 0.5 | 0.5 | 0.5 |
| Lubricant | 0.4 | 0.5 | 0.5 | 0.5 | 0.5 | 0.4 | 0.4 | 0.5 | 0.5 | 0.5 | 0.5 |

[Table 2]

| | | | Example | | | | | | | | | |
|---|---|---|---|---|---|---|---|---|---|---|---|---|
| | | | 12 | 13 | 14 | 15 | 16 | 17 | 18 | 19 | 20 | 21 |
| (A) PBT resin | A1 | IV:0.80dL/g | 100 | - | - | - | 100 | 100 | - | 100 | 100 | 100 |
| | A2 | IV:0.79dL/g | - | 100 | 100 | 100 | - | - | - | - | - | - |
| | A3 | IV:0.73dL/g | - | - | - | - | - | - | - | - | - | - |
| | A4 | IV:0.69dL/g | - | - | - | - | - | - | 100 | - | - | - |
| (B) Fibrous inorganic compound | B1 | - | 68.6 | 65.6 | 68.6 | 68.6 | 64.9 | 68.6 | 68.6 | 68.6 | 68.6 | 27.0 |
| (C) Phosphinate and the like | C1 | Particle size :75μm | - | - | - | - | - | - | - | - | - | - |
| | C2 | Particle size :20μm | - | - | - | - | - | - | - | - | - | - |
| | C3 | Particle size :10um | 34.3 | 28.4 | 37.8 | 40.0 | 32.5 | 34.3 | 34.3 | 34.3 | 34.3 | 34.3 |
| | C4 | Particle size :5μm | - | - | - | - | - | - | - | - | - | - |
| (D) Salt of triazine and cyanuric acid | D1 | Particle size :50um | 11.4 | 10.9 | 8.0 | 5.7 | - | - | 11.4 | 15.0 | 11.4 | 11.4 |
| | D2 | Particle size :3μm | - | - | - | - | 5.4 | 11.4 | - | - | - | - |
| | D3 | Particle size :60um | - | - | - | - | - | - | - | - | - | - |
| (E) Thermoplastic polyester elastomer | E1 | - | 11.4 | 10.9 | 11.4 | 11.4 | 10.8 | 11.4 | 11.4 | 5.0 | 15.0 | 15.0 |
| | E2 | - | - | - | - | - | - | - | - | - | - | - |
| | E3 | - | - | - | - | - | - | - | - | - | - | - |
| | E4 | - | - | - | - | - | - | - | - | - | - | - |
| | E5 | - | - | - | - | - | - | - | - | - | - | - |
| (F) Polycarbodiimide | F1 | - | 1.1 | 1.1 | 1.1 | 1.1 | 1.1 | 1.1 | 1.1 | 1.1 | 1.1 | 1.1 |
| (G) Fluorine resin | G1 | - | 0.7 | 0.7 | 0.7 | 0.7 | 0.6 | 0.7 | 0.7 | 0.7 | 0.7 | 0.7 |
| Antioxidant | | | 0.2 | 0.2 | 0.2 | 0.2 | 0.2 | 0.2 | 0.2 | 0.2 | 0.2 | 0.2 |
| Secondary antioxidant | | | 0.5 | 0.4 | 0.5 | 0.5 | 0.4 | 0.5 | 0.5 | 0.5 | 0.5 | 0.5 |
| Lubricant | | | 0.5 | 0.4 | 0.5 | 0.5 | 0.4 | 0.5 | 0.5 | 0.5 | 0.5 | 0.5 |

[Table 3]

| | | | Comparative Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| (A) PBT resin | A1 | IV:0.80dL/g | 100 | 100 | 100 | - | 100 | 100 | 100 | 100 | 100 | 100 | 100 |
| | A2 | IV:0.79dL/g | - | - | - | 100 | - | - | - | - | - | - | - |
| | A3 | IV:0.73dL/g | - | - | - | - | - | - | - | - | - | - | - |
| | A4 | IV:0.69dL/g | - | - | - | - | - | - | - | - | - | - | - |
| (B) Fibrous inorganic compound | B1 | - | 55.9 | 58.6 | 61.6 | 64.2 | 64.9 | 68.6 | 65.6 | 68.6 | 71.9 | 68.6 | 68.6 |
| (C) Phosphinate and the like | C1 | Particle size :75μm | 18.6 | 19.5 | 30.8 | 32.1 | 32.5 | 34.3 | 32.8 | 34.3 | 36.0 | 34.3 | 34.3 |
| | C2 | Particle size :20μm | - | - | - | - | - | - | - | - | - | - | - |
| | C3 | Particle size :10μm | - | - | - | - | - | - | - | - | - | - | - |
| | C4 | Particle size :5μm | - | - | - | - | - | - | - | - | - | - | - |
| (D) Salt of triazine and cyanuric acid | D1 | Particle size :50um | 9.3 | 14.6 | 10.3 | 16.1 | 16.2 | 11.4 | 10.9 | 11.4 | 12.0 | 11.4 | 11.4 |
| | D2 | Particle size :3μm | - | - | - | - | - | - | - | - | - | - | - |
| | D3 | Particle size :60um | - | - | - | - | - | - | - | - | - | - | - |
| (E) Thermoplastic polyester elastomer | E1 | - | - | - | - | - | - | - | - | - | - | - | - |
| | E2 | - | - | - | - | - | - | 11.4 | - | - | - | - | - |
| | E3 | - | - | - | - | - | - | - | 6.6 | 11.4 | 16.8 | - | - |
| | E4 | - | - | - | - | - | - | - | - | - | - | 11.4 | - |
| | E5 | - | - | - | - | - | - | - | - | - | - | - | 11.4 |
| (F) Polycarbodiimide | F1 | - | 0.9 | 1.0 | 1.0 | - | 1.1 | 1.1 | 1.1 | 1.1 | 1.2 | 1.1 | 1.1 |
| (G) Fluorine resin | G1 | - | 0.6 | 0.6 | 0.6 | 0.4 | 0.6 | 0.7 | 0.7 | 0.7 | 0.7 | 0.7 | 0.7 |
| Antioxidant | | | 0.2 | 0.2 | 0.2 | 0.2 | 0.2 | 0.2 | 0.2 | 0.2 | 0.2 | 0.2 | 0.2 |
| Secondary antioxidant | | | 0.4 | 0.4 | 0.4 | 0.4 | 0.4 | 0.5 | 0.4 | 0.5 | 0.5 | 0.5 | 0.5 |
| Lubricant | | | 0.4 | 0.4 | 0.4 | 0.6 | 0.4 | 0.5 | 0.4 | 0.5 | 0.5 | 0.5 | 0.5 |

[Table 4]

| | | | Comparative Example | | | | | | | | | | |
|---|---|---|---|---|---|---|---|---|---|---|---|---|---|
| | | | 12 | 13 | 14 | 15 | 16 | 17 | 18 | 19 | 20 | 21 | 22 |
| (A) PBT resin | A1 | IV:0.80dL/g | 100 | 100 | 100 | 100 | 100 | - | - | - | 100 | 100 | 100 |
| | A2 | IV:0.79dL/g | - | - | - | - | - | 100 | 100 | 100 | - | - | - |
| | A3 | IV:0.73dL/g | - | - | - | - | - | - | - | - | - | - | - |
| | A4 | IV:0.69dL/g | - | - | - | - | - | - | - | - | - | - | - |
| (B) Fibrous inorganic compound | B1 | - | 55.9 | 72.8 | 82.9 | 61.6 | 61.6 | 61.6 | 63.6 | 62.9 | 55.9 | 61.6 | 61.6 |

(continued)

| | | | Comparative Example | | | | | | | | | | |
|---|---|---|---|---|---|---|---|---|---|---|---|---|---|
| | | | 12 | 13 | 14 | 15 | 16 | 17 | 18 | 19 | 20 | 21 | 22 |
| (C) Phosphinate and the like | C1 | Particle size :75μm | 27.9 | 36.4 | 55.2 | 30.8 | - | - | - | - | - | - | - |
| | C2 | Particle size :20μm | - | - | - | - | - | - | - | - | - | - | - |
| | C3 | Particle size :10μm | - | - | - | - | 30.8 | 30.8 | 31.8 | 23.1 | - | - | - |
| | C4 | Particle size :5μm | - | - | - | - | - | - | - | - | 27.9 | 30.8 | 30.8 |
| (D) Salt of triazine and cyanuric acid | D1 | Particle size :50μm | - | 18.2 | 20.7 | - | 10.3 | - | 3.2 | 10.5 | - | 10.3 | - |
| | D2 | Particle size :3μm | - | - | - | - | - | - | - | - | - | - | - |
| | D3 | Particle size :60um | - | - | - | 10.3 | - | - | - | - | - | - | 10.3 |
| (E) Thermoplastic polyester elastomer | E1 | - | - | 12.1 | 13.8 | - | - | 10.3 | 10.6 | 10.5 | - | - | - |
| | E2 | - | - | - | - | - | - | - | - | - | - | - | - |
| | E3 | - | - | - | - | - | - | - | - | - | - | - | - |
| | E4 | - | - | - | - | - | - | - | - | - | - | - | - |
| | E5 | - | - | - | - | - | - | - | - | - | - | - | - |
| (F) Polycarbodiimide | F1 | - | 0.9 | 1.2 | 1.4 | 1.0 | 1.0 | 1.0 | 1.1 | 1.0 | 0.9 | 1.0 | 1.0 |
| (G) Fluorine resin | G1 | - | 0.6 | 0.7 | 0.8 | 0.6 | 0.6 | 0.6 | 0.6 | 0.6 | 0.6 | 0.6 | 0.6 |
| Antioxidant | | | 0.2 | 0.2 | 0.3 | 0.2 | 0.2 | 0.2 | 0.2 | 0.2 | 0.2 | 0.2 | 0.2 |
| Secondary antioxidant | | | 0.4 | 0.5 | 0. 6 | 0.4 | 0.4 | 0.4 | 0.4 | 0.4 | 0.4 | 0.4 | 0.4 |
| Lubricant | | | 0.4 | 0.5 | 0.6 | 0.4 | 0.4 | 0.4 | 0.4 | 0.4 | 0.4 | 0.4 | 0.4 |

[Evaluation]

The following evaluations were performed using the obtained pellets of each example and comparative example.

(1) Flammability

In accordance with the method of Subject 94 (UL94) of Underwriters Laboratories Inc., five test pieces (thickness: 1.6 mm) were used to evaluate the flame retardancy (V-0). Those that satisfied V-0 were determined as V-0 and those that did not satisfy V-0 were determined as having failed. The evaluation results are shown in Tables 5 to 8.

(2) Tracking resistance

In accordance with IEC 60112, Version 3, the applied voltage (V: volt) at which tracking occurs on the test piece was measured using 0.1 mass% of aqueous ammonium chloride solution and a platinum electrode. The measurement results are shown in Tables 5 to 8. The maximum applied voltage was 600 V, and when the applied voltage was 600 V, it can be said that the tracking resistance was good.

(3) Tensile strength

Using the obtained pellets, the tensile strength was measured in accordance with ISO 527-1,2. The measurement results are shown in Tables 5 to 8. If the tensile strength was (B) 50 MPa or more without reinforcement with the

fibrous inorganic compound, and if the tensile strength was (B) 90 MPa or more with reinforcement with the fibrous inorganic compound, it can be said that the mechanical strength was good.

(4) Hydrolytic resistance

After exposing the material for 50 hours to a pressure cooker testing machine of 100% RH at 121°C, the tensile strength (MPa) was measured in accordance with ISO 527-1,2, and the strength retention was calculated from the tensile strength before treatment. The calculation results are shown in Tables 5 to 8. It can be said that the hydrolytic resistance was good when the strength retention was 70% or more.

(5) Melt viscosity

After drying the obtained pellets at 140°C for three hours, in accordance with ISO 11443 and by using a Capirograph 1B (manufactured by Toyo Seiki Seisaku-sho, Ltd.), the measurements were performed under conditions of a furnace temperature of 260°C, a φ1 mm × 20 mmL capillary, and a shear rate of 1000sec$^{-1}$. The measurement results are shown in Tables 5 to 8. When the melt viscosity was equal to or less than 0.45 kPa•s, the melt viscosity was low and the fluidity was good.

[Table 5]

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Flammability (1.6 mmt V-0) | | V-0 | V-0 | V-0 | V-0 | V-0 | V-0 | V-0 | V-0 | V-0 | V-0 | V-0 |
| Tracking resistance (V) | | 600 | 600 | 600 | 600 | 600 | 600 | 600 | 600 | 600 | 600 | 600 |
| Tensile strength (MPa) | | 105 | 103 | 93 | 91 | 105 | 106 | 106 | 100 | 100 | 103 | 103 |
| Hydrolytic resistance (%) | | 84 | 82 | 77 | 74 | 71 | 71 | 72 | 70 | 75 | 71 | 70 |
| Melt viscosity (kPa · s) | | 0.43 | 0.41 | 0.45 | 0.45 | 0.30 | 0.25 | 0.25 | 0.28 | 0.35 | 0.29 | 0.28 |
| Formula 1 | ≥140 | 149 | 187 | 228 | 228 | 187 | 149 | 149 | 187 | 187 | 187 | 187 |

[Table 6]

| | | Example | | | | | | | | | |
|---|---|---|---|---|---|---|---|---|---|---|---|
| | | 12 | 13 | 14 | 15 | 16 | 17 | 18 | 19 | 20 | 21 |
| Flammability (1.6 mmt V-0) | | V-0 | V-0 | V-0 | V-0 | V-0 | V-0 | V-0 | V-0 | V-0 | V-0 |
| Tracking resistance (V) | | 600 | 600 | 600 | 600 | 600 | 600 | 600 | 600 | 600 | 600 |
| Tensile strength (MPa) | | 102 | 106 | 97 | 96 | 104 | 101 | 102 | 105 | 97 | 75 |
| Hydrolytic resistance (%) | | 75 | 71 | 70 | 71 | 81 | 77 | 70 | 70 | 74 | 70 |
| Melt viscosity (kPa · s) | | 0.35 | 0.32 | 0.32 | 0.32 | 0.34 | 0.31 | 0.28 | 0.33 | 0.31 | 0.30 |
| Formula 1 | ≥140 | 187 | 157 | 187 | 187 | 149 | 187 | 187 | 248 | 162 | 175 |

[Table 7]

| | Comparative Example | | | | | | | | | | |
|---|---|---|---|---|---|---|---|---|---|---|---|
| | 1 | 2 | 3 | 4 | 5 | 6 | 7 | 8 | 9 | 10 | 11 |
| Flammability (1.6 mmt V-0) | V-0 | V-0 | V-0 | V-0 | V-0 | Fail | V-0 | Fail | Fail | V-0 | Fail |
| Tracking resistance (V) | 450 | 500 | 600 | 575 | 600 | 600 | 600 | 600 | 600 | 600 | 600 |
| Tensile strength (MPa) | 129 | 125 | 115 | 105 | 104 | 93 | 101 | 95 | 85 | 102 | 105 |
| Hydrolytic resistance (%) | 61 | 63 | 61 | 63 | 63 | 67 | 72 | 79 | 81 | 75 | 78 |
| Melt viscosity (kPa · s) | 0.27 | 0.46 | 0.51 | 0.56 | 0.57 | 0.51 | 0.46 | 0.43 | 0.39 | 0.47 | 0.57 |

(continued)

| | | Comparative Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Formula 1 | ≥140 | 168 | 201 | 237 | 273 | 277 | 90 | 171 | 122 | 68 | 178 | 126 |

[Table 8]

| | | Comparative Example | | | | | | | | | | |
|---|---|---|---|---|---|---|---|---|---|---|---|---|
| | | 12 | 13 | 14 | 15 | 16 | 17 | 18 | 19 | 20 | 21 | 22 |
| Flammability (1.6 mmt V-0) | | Fail | V-0 | V-0 | V-0 | V-0 | Fail | Fail | Fail | Fail | V-0 | V-0 |
| Tracking resistance (V) | | - | 600 | 600 | 600 | 600 | 575 | 600 | 600 | - | 600 | 600 |
| Tensile strength (MPa) | | 122 | 98 | 78 | 117 | 119 | 106 | 107 | 112 | 124 | 118 | 116 |
| Hydrolytic resistance (%) | | 70 | 76 | 74 | 68 | 65 | 69 | 65 | 69 | 62 | 68 | 60 |
| Melt viscosity (kPa · s) | | 0.44 | 0.47 | 0.51 | 0.44 | 0.33 | 0.26 | 0.26 | 0.28 | 0.29 | 0.34 | 0.31 |
| Formula 1 | ≥140 | 168 | 228 | 329 | 237 | 237 | 116 | 136 | 129 | 168 | 237 | 237 |

From Tables 5 to 8, all evaluations in Examples 1 to 21 were good. That is, the PBT resin composition of Examples 1 to 19 exhibited excellent flame retardancy, tracking resistance, and hydrolytic resistance and also low melt viscosity.

Meanwhile, in Comparative Examples 1 to 22, it was not possible for all evaluation results to be good at the same time.

From the above, it can be seen that if the components (A) to (G) are not blended at the prescribed content, it is not possible to obtain results in which all of the following are satisfied: good flame retardancy, good tracking resistance, good hydrolytic resistance, and low melt viscosity.

Further, flame retardancy was inferior in all of Comparative examples 6, 8, 9, 11, and 17 to 19, which do not satisfy Formula 1.

## Claims

**1.** A flame-retardant polybutylene terephthalate resin composition comprising, relative to 100 parts by mass of (A) a polybutylene terephthalate resin:

0 to 100 parts by mass of (B) a fibrous inorganic compound;
25 to 50 parts by mass of (C) at least one selected from the group consisting of a phosphinate represented by General formula (1), a polymer thereof, a diphosphinate represented by General formula (2), and a polymer thereof;
4 to 15 parts by mass of (D) a salt of a triazine compound with a cyanuric acid or an isocyanuric acid;
5 to 15 parts by mass of (E) a thermoplastic polyester elastomer;
0.5 to 3 parts by mass of (F) a polycarbodiimide compound; and
0 to 3 parts by mass of (G) a fluorine resin.

[Formula 1]

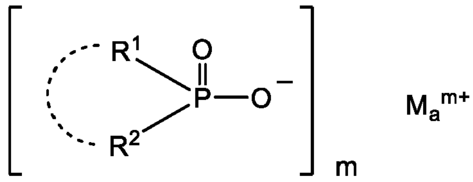

General formula (1)

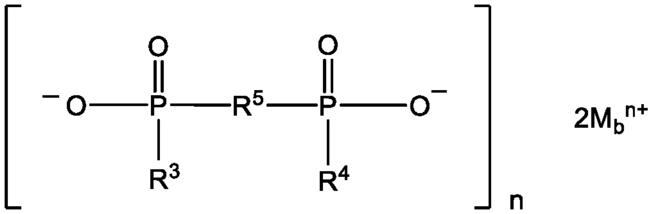

General formula (2)

[In General formula (1) and General formula (2), $R^1$, $R^2$, $R^3$, and $R^4$ independently indicate an alkyl group, a cycloalkyl group, an aryl group, or an aralkyl group, respectively, and $R^5$ indicates an alkylene group, an alicyclic divalent group, or an aromatic divalent group. $R^1$ and $R^2$ may bond together to form a ring together with adjacent phosphorus atoms. $M_a^{m+}$ indicates a metal of valence m, and m is an integer of 2 to 4. $M_b^{n+}$ indicates a metal of valence n, and n is an integer of 2 to 4.]

2. The flame-retardant polybutylene terephthalate resin composition according to claim 1, wherein a cumulative particle size (D95) of the phosphinate represented by the General formula (1), the polymer thereof, the diphosphinate represented by the General formula (2), and the polymer thereof measured in accordance with JIS 8825 is 10 μm or more.

3. The flame-retardant polybutylene terephthalate resin composition according to claim 1 or 2, wherein (F) the polycarbodiimide compound is an aromatic polycarbodiimide.

4. The flame-retardant polybutylene terephthalate resin composition according to any one of claims 1 to 3, wherein when a content of the (C) component is defined as $C_{content}$ (parts by mass), a content of the (D) component is defined as $D_{content}$ (parts by mass), a content of the (B) component is defined as $B_{content}$ (parts by mass), a content of the (G) component is defined as $G_{content}$ (parts by mass), a content of the (E) component is defined as $E_{content}$ (parts by mass), and a density of the (E) component is defined as $E_{density}$ (g/cm$^3$), Formula 1 below is satisfied.
[Formula 1]

$$5C_{content} + 5D_{content} + 0.5B_{content} + G_{content} - \frac{10E_{content}}{E_{\text{density}}{}^{3}} \geq 140 \quad \cdots \text{Formula 1}$$

5. A resin molded product obtained by molding the flame-retardant polybutylene terephthalate resin composition according to any one of claims 1 to 4.

**Patentansprüche**

1. Flammhemmende Polybutylenterephthalat-Harzzusammensetzung, umfassend, bezogen auf 100 Masseteile eines Polybutylenterephthalat-Harzes (A):

0 bis 100 Masseteile von (B) einer faserigen anorganischen Verbindung;
25 bis 50 Masseteile von (C) mindestens einem, ausgewählt aus der Gruppe, bestehend aus einem Phosphinat, dargestellt durch die allgemeine Formel (1), einem Polymer davon, einem Diphosphinat, dargestellt durch die allgemeine Formel (2), und einem Polymer davon;
4 bis 15 Masseteile von (D) einem Salz einer Triazinverbindung mit einer Cyanursäure oder einer Isocyanursäure;
5 bis 15 Masseteile von (E) einem thermoplastischen Polyesterelastomer;
0,5 bis 3 Masseteile (F) einer PolycarbodiimidVerbindung; und
0 bis 3 Masseteile von (G) einem Fluorharz.

[Formel 1]

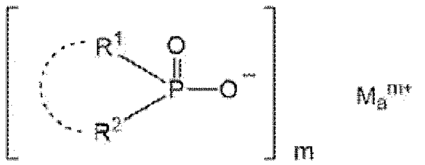

Allgemeine Formel (1)

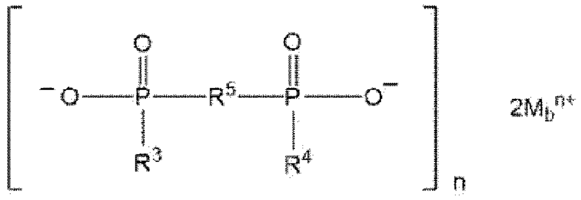

Allgemeine Formel (2)

[In der allgemeinen Formel (1) und der allgemeinen Formel (2) bezeichnen $R^1$, $R^2$, $R^3$ und $R^4$ unabhängig voneinander eine Alkylgruppe, eine Cycloalkylgruppe, eine Arylgruppe bzw. eine Aralkylgruppe, und $R^5$ bezeichnet eine Alkylengruppe, eine alicyclische zweiwertige Gruppe oder eine aromatische zweiwertige Gruppe. $R^1$ und $R^2$ können sich zusammen mit benachbarten Phosphoratomen zu einem Ring verbinden. $M_a^{m+}$ bezeichnet ein Metall der Wertigkeit m, wobei m eine ganze Zahl von 2 bis 4 ist. $M_b^{n+}$ bezeichnet ein Metall der Wertigkeit n, wobei n eine ganze Zahl von 2 bis 4 ist.]

2. Flammhemmende Polybutylenterephthalat-Harzzusammensetzung gemäß Anspruch 1, wobei eine kumulative Teilchengröße (D95) des Phosphinats, das durch die allgemeine Formel (1) dargestellt wird, des Polymers davon, des Diphosphinats, das durch die allgemeine Formel (2) dargestellt wird, und des Polymers davon, gemessen in Übereinstimmung mit JIS 8825, 10 μm oder mehr beträgt.

3. Flammhemmende Polybutylenterephthalat-Harzzusammensetzung gemäß Anspruch 1 oder 2, wobei die Polycarbodiimidverbindung (F) ein aromatisches Polycarbodiimid ist.

4. Flammhemmende Polybutylenterephthalat-Harzzusammensetzung gemäß einem der Ansprüche 1 bis 3, wobei wenn der Gehalt der Komponente (C) als $C_{Gehalt}$ (Masseteile) definiert ist, der Gehalt der Komponente (D) als $D_{Gehalt}$ (Masseteile) definiert ist, der Gehalt der Komponente (B) als $B_{Gehalt}$ (Masseteile) definiert ist, der Gehalt der Komponente (G) als $G_{Gehalt}$ (Massenteile) definiert ist, der Gehalt der Komponente (E) als $E_{Gehalt}$ (Massenteile) definiert ist, und eine Dichte der Komponente (E) definiert ist als $E_{Dichte}$ (g/cm³), die nachstehende Formel 1 erfüllt ist.

[Formel 1]

$$5C_{Gehalt} + 5D_{Gehalt} + 0{,}5B_{Gehalt} + G_{Gehalt} - \frac{10E_{Gehalt}}{E_{Dichte}^3} \geq 140$$

5. Harzformteil, erhalten durch Formen der flammhemmenden Polybutylenterephthalat-Harzzusammensetzung nach einem der Ansprüche 1 bis 4.

## Revendications

1. Composition de résine de poly(butylène téréphtalate) ignifuge comprenant, par rapport à 100 parties en masse de (A) une résine de poly(butylène téréphtalate) :

0 à 100 parties en masse de (B) un composé inorganique fibreux ;
25 à 50 parties en masse de (C) au moins un élément sélectionné parmi le groupe constitué d'un phosphinate représenté par la formule générale (1), un polymère de celui-ci, un diphosphinate représenté par la formule générale (2), et un polymère de celui-ci ;
4 à 15 parties en masse de (D) un sel d'un composé triazine avec un acide cyanurique ou un acide isocyanurique ;
5 à 15 parties en masse de (E) un élastomère de polyester thermoplastique ;
0,5 à 3 parties en masse de (F) un composé polycarbodiimide ; et
0 à 3 parties en masse de (G) une résine fluorée.

[Formule 1]

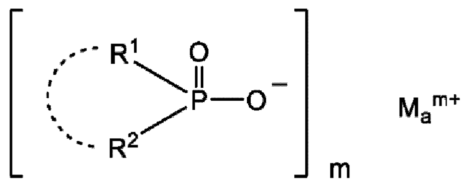

Formule générale (1)

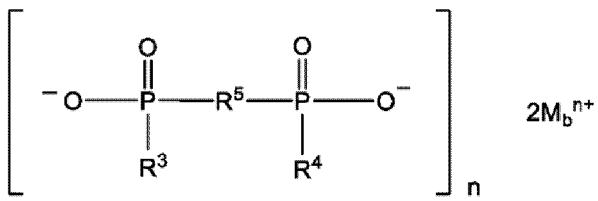

Formule générale (2)

[Dans la formule générale (1) et la formule générale (2), $R^1$, $R^2$, $R^3$, et $R^4$ indiquent indépendamment un groupe alkyle, un groupe cycloalkyle, un groupe aryle ou un groupe aralkyle, respectivement, et $R^5$ indique un groupe alkylène, un groupe divalent alicyclique ou un groupe divalent aromatique. $R^1$ et $R^2$ peuvent se lier ensemble pour former un cycle avec des atomes de phosphore adjacents. $M_a^{m+}$ indique un métal de valence m, et m est un nombre entier de 2 à 4. $M_b^{n+}$ indique un métal de valence n, et n est un nombre entier de 2 à 4.]

**2.** Composition de résine de poly(butylène téréphtalate) ignifuge selon la revendication 1, dans laquelle une taille de particule cumulée (D95) du phosphinate représenté par la formule générale (1), du polymère de celui-ci, du diphosphinate représenté par la formule générale (2), et du polymère de celui-ci, mesurée conformément à la norme JIS 8825 est supérieure ou égale à 10 μm.

**3.** Composition de résine de poly(butylène téréphtalate) ignifuge selon la revendication 1 ou 2, dans laquelle (F) le composé polycarbodiimide est un polycarbodiimide aromatique.

**4.** Composition de résine de poly(butylène téréphtalate) ignifuge selon l'une des revendications 1 à 3, dans laquelle lorsqu'une teneur en composant (C) est définie par $C_{teneur}$ (parties en masse), une teneur en composant (D) est définie par $D_{teneur}$ (parties en masse), une teneur en composant (B) est définie par $B_{teneur}$ (parties en masse), une teneur en composant (G) est définie par $G_{teneur}$ (parties en masse), une teneur en composant (E) est définie par $E_{teneur}$ (parties en masse) et une densité du composant (E) est définie par $E_{densité}$ (g/cm$^3$), la formule 1 ci-dessous est satisfaite.
[Formule 1]

$$5C_{teneur} + 5D_{teneur} + 0.5B_{teneur} + G_{teneur} - \frac{10E_{teneur}}{E_{densité}^{3}} \geq 140 \quad \cdots \text{Formula 1}$$

**5.** Produit moulé en résine obtenu par moulage de la composition de résine de poly(butylène téréphtalate) ignifuge selon l'une des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011148796 A
- JP 2019044037 A
- JP 2009215347 A
- US 2012083553 A
- US 8921465 B
- DE 112006001824
- US 2941956 A
- JP SHO4733279 B


### Non-patent literature cited in the description


- *J. Org. Chem.*, 1963, vol. 28, 2069-2075
- *Chemical Review*, 1981, vol. 81 (4), 619-621